# EUROPEAN PATENT SPECIFICATION

(11) **EP 1 473 343 B1**
(45) Date of publication and mention of the grant of the patent: **12.09.2007**
(21) Application number: 04008204.2
(22) Date of filing: 05.04.2004
(51) Int. Cl.: C09D 175/16

(54) **Process for multi-layer coating of substrates**
Verfahren zur Mehrschichtbeschichtung von Substraten
Procédé de revêtement multicouche de substrats

(30) Priority: 30.04.2003 US 426601
(43) Date of publication of application: 03.11.2004
(73) Proprietor: E. I. du Pont de Nemours and Company, Wilmington, Delaware 19898 (US)
(72) Inventor: Wissing, Klaus, 40627 Düsseldorf (DE); Flosbach, Carmen, 42287 Wuppertal (DE); Frese, Peter, 84028 Landshut (DE); Reis, Oliver, 58456 Witten (DE)
(74) Representative: DuPont Performance Coatings Biering/Blum/Kimpel

(56) References cited:
- US-A- 5 516 812
- US-A- 5 523 443
- US-A- 5 686 531

## Description

### Field of the Invention

The invention relates to a process for the multi-layer coating of substrates, in particular vehicles and vehicle parts, wherein curing of at least one of the layers of the multi-layer structure, preferably the outer layer, is performed with high energy radiation and by means of moisture.

### Description of Related Art

Various dual cure systems are known in coatings technology which combine curing by means of high energy radiation, in particular by means of UV radiation, with moisture curing. Such systems generally comprise organopolysiloxane binders which contain both hydrolysable silane groups and free-radically polymerizable, olefinically unsaturated groups. WO 99/67318, for example, describes a binder system based on two differently functionalized polysiloxanes, wherein one polysiloxane comprises (meth)acryloyl groups and the second polysiloxane comprises ethylenically unsaturated groups and hydrolysable silane groups. This binder system is used in potting applications and in coating compositions for electronic components and electronic circuits.

JP 5311082 describes a radiation- and moisture-curing binder system which is produced by reacting a polyether comprising amino end groups or a polybutadiene/acrylonitrile copolymer with compounds which contain epoxy and alkoxysilane groups and further reacting the resultant reaction product with compounds which contain (meth)acryloyl groups and, for example, NCO groups. One-layer coatings are obtained which are tack-free after 24 hours and exhibit good tear strength and elongation.

WO 94/09013 discloses a UV-curable coating system with good electrical properties for electronic circuits, which system additionally cures by means of moisture. A urea oligomer with acryloyl groups and alkoxysilane groups is used, which oligomer is produced, for example, from a urea derivative, in particular the reaction product of a diisocyanate and an amine containing alkoxysilane groups and a (meth)acryloyl-functional diol.

It is also known to use coating compositions curable by means of UV radiation in vehicle coating. Coating compositions based on free-radically polymerizable binders are in particular used in such applications. One shortcoming of these UV-curable coatings is, inter alia, that, when three-dimensional objects are to be coated, only inadequate curing is observed in shaded areas, i.e., in areas that are not reached or only inadequately reached by the UV radiation. In an attempt to remedy this problem, "dual cure" systems, i.e., binder systems, that cure both by free-radical polymerization with UV-irradiation and by another cross-linking mechanism, for example, by means of an OH/NCO reaction. Examples of such dual cure systems are described in WO-A-98/00456 and DE-A-197 09 560. Binder systems which cure not only by UV curing but additionally by an OH/NCO reaction are two-component systems, which must be prepared in two components and can be mixed together only shortly before application. There are no teachings in the prior art concerning the use of coating compositions that are curable both by means of UV radiation and by means of moisture for the multi-layer coating of vehicles and parts thereof.

There is a requirement when coating vehicles and vehicle parts for multi-layer coating processes using coating compositions curable by means of UV radiation, in particular coating compositions for producing the outer layer of a multi-layer coating, with which processes coatings are obtained which have elevated hardness and scratch resistance and good chemical resistance and with which elevated cross-linking is achieved even in shaded areas not reached by the UV radiation. In particular, adequate hardness, scratch resistance and good chemical resistance should also be achieved even at low curing temperatures of, for example, no more than 80°C, within relatively short curing times. The coatings should further exhibit excellent optical properties.

### Summary of the Invention

The invention relates to a process for the multilayer coating of substrates, in particular vehicles and vehicle parts, by the application of two or more coating layers and curing of the applied coatings, wherein at least one of the coating layers is produced from a coating composition which comprises a binder system with free-radically polymerizable olefinic double bonds and with hydrolysable alkoxysilane groups, wherein the resin solids content of the coating composition exhibits a double bond equivalent weight of C=C double bonds of 200-2000, preferably of 300-1500, and a content of silicon bound in alkoxysilane groups of 1-10 wt.%, preferably of 1-7 wt.%, particularly preferably of 2-6 wt.%, and wherein the coating composition contains 10-60 wt.%, preferably 15-45 wt.%, relative to the complete coating composition of polar, water-miscible, organic solvents with a water solubility of at least 220 g/l and wherein curing of the coating layer, of which there is at least one, proceeds by free-radical polymerization of the C=C double bonds on irradiation with high-energy radiation and by the formation of siloxane bridges under the action of moisture.

A water solubility of the organic solvent of at least 220 g/l means that at least 220 g of the corresponding organic solvent must dissolve in one liter of water.

The invention preferably relates to a process for the multi-layer coating of substrates, in particular vehicles and vehicle parts, by applying two or more coating layers and curing of the applied coatings, wherein the outer layer of the multi-layer structure is prepared from the above described coating composition and cured as described above.

### Detailed Description of the Embodiments

The resin solids content of the coating compositions curable by means of high energy radiation and by means of moisture includes the binder system with free-radically polymerizable olefinic double bonds and with hydrolysable alkoxysilane groups, together with any optionally present reactive diluents.

The outer layer of the multi-layer structure may comprise a clear coat layer applied onto a color-imparting and/or special effect-imparting base coat layer or a pigmented one-layer top coat layer applied onto a prior coating. It may also comprise a transparent sealing layer which is applied, for example, onto the outer coating layer of a multi-layer coating, in particular onto a clear coat layer or a pigmented one-layer top coat layer, in order to achieve particular scratch resistance.

It has surprisingly been found that it is possible by means of the process according to the invention to produce clear coat layers or one-layer top coat layers and sealing layers which, in addition to adequate hardness, also exhibit elevated cross-linking and chemical resistance in shaded areas, wherein these properties can be achieved even at low curing temperatures of, for example, no more than 80°C, within relatively short curing times. It has also surprisingly been found that it is possible to improve the optical properties of the resultant coatings by using the mentioned water miscible organic solvents. This avoids clouding of the cured coating due the reduced temperature that occurs during drying due to evaporation thereby substantially reducing the inclusion of moisture in the paint film.

The coating compositions curable by means of high energy radiation and by means of moisture used in the process according to the invention contain binders with free-radically polymerizable olefinic double bonds and with hydrolysable alkoxysilane groups. The free-radically polymerizable olefinic double bonds and the hydrolysable alkoxysilane groups may here in principle be present in the same binder and/or in separate binders.

The coating compositions used in the process according to the invention are cured by means of two different cross-linking mechanisms. Cross-linking proceeds, on the one hand, by means of free-radical polymerization of olefinic double bonds and, on the other, by means of the hydrolysis and subsequent condensation of alkoxysilane groups to form siloxane bridges.

Suitable binders with free-radically polymerizable olefinic double bonds which may be considered are, for example, any binders known to the skilled person which can be cross-linked by free-radical polymerization. These binders are prepolymers, such as, polymers and oligomers, containing, per molecule, one or more, for example, on average 1 to 20, preferably 2 to10, particularly preferably 2 to6 free-radically polymerizable olefinic double bonds.

The polymerizable double bonds may, for example, be present in the form of (meth)acryloyl, vinyl, allyl, maleate and/or fumarate groups. (Meth)acryloyl groups are preferred.

Both here and below, (meth)acryloyl and (meth)acrylic are respectively intended to mean acryloyl and/or methacryloyl and acrylic and/or methacrylic.

Examples of prepolymers or oligomers include (meth)acryloyl-functional poly(meth)acrylates, polyurethane (meth)acrylates, polyester (meth)acrylates, unsaturated polyesters, polyether (meth)acrylates, silicone (meth)acrylates, epoxy (meth)acrylates, amino (meth)acrylates and melamine (meth)acrylates. The number average molar mass Mn of these compounds may, for example, be from 500 to 10000 g/mol, preferably from 500 to 5000 g/mol. The binders may be used individually or as a mixture.

Compounds which contain free-radically polymerizable double bonds in the form of the preferred (meth)acryloyl groups may be produced in accordance with conventional methods. This may proceed, for example, by: transesterifying OH-functional resins, such as OH-functional polyesters, polyacrylates, polyurethanes, polyethers or epoxy resins, with alkyl esters of (meth)acrylic acid; esterifying the stated OH-functional resins with (meth)acrylic acid; reacting the stated OH-functional resins with isocyanate-functional (meth)acrylates; reacting acid-functional resins, such as polyesters, polyacrylates, polyurethanes with epoxy-functional (meth)acrylates; reacting epoxy-functional resins, such as polyesters, polyacrylates, epoxy resins with (meth)acrylic acid. These production methods stated by way of example are described in the literature and known to the person skilled in the art.

The (meth)acryloyl-functional prepolymers may be used in combination with reactive diluents, i.e., free-radically polymerizable low molecular weight compounds with a molar mass of below 500 g/mol. The reactive diluents may be mono-, di- or polyunsaturated. Examples of monounsaturated reactive diluents are (meth)acrylic acid and the esters thereof, maleic acid and the semi-esters thereof, vinyl acetate, vinyl ether, substituted vinyl ureas, styrene, vinyltoluene. Examples of diunsaturated reactive diluents are di(meth)acrylates such as alkylene glycol di(meth)acrylate, polyethylene glycol di(meth)acrylate, 1,3-butanediol di(meth)acrylate, vinyl (meth)acrylate, allyl (meth)acrylate, divinylbenzene, dipropylene glycol di(meth)acrylate, hexanediol di(meth)acrylate. Examples of polyunsaturated reactive diluents are glycerol tri(meth)acrylate, trimethylolpropane tri(meth)acrylate, pentaerythritol tri(meth)acrylate, pentaerythritol tetra(meth)acrylate. The reactive diluents may be used alone or in mixture.

Binders with hydrolysable alkoxysilane groups which may be considered are those conventional binders known to the person skilled in the art which may be functionalized with alkoxysilane groups. The alkoxysilane groups may comprise monoalkoxysilane, dialkoxysilane and/or trialkoxysilane groups. Trialkoxysilane groups are preferred. The alkoxysilane groups comprise, for example, 1-10, preferably, 1-3 C atoms in the alkoxy residue.

The binders bearing alkoxysilane groups may be produced, for example, by: copolymerizing alkoxysilane-functional (meth)acrylate monomers or by copolymerizing vinylalkoxysilanes; reacting OH-functional resins, such as, OH-functional polyesters, polyacrylates, polyurethanes, polyethers or epoxy resins with isocyanate-functional alkoxysilanes; reacting epoxy-functional resins with aminoalkoxysilanes; reacting acid-functional resins with epoxy-functional alkoxysilanes; reacting isocyanate-functional resins (for example, polyurethanes, polyesterurethane prepolymers, polyetherurethane prepolymers, acrylate copolymers with free NCO groups) with aminoalkoxysilanes; reacting isocyanate-functional resins with OH-functional alkoxysilanes produced in situ, for example, by addition of aminoalkoxysilanes onto cyclic carbonates. The particular reaction must be performed with exclusion of water in order to suppress premature hydrolysis of the alkoxysilane groups.

Binders bearing both olefinic double bonds, in particular (meth)acryloyl groups, and hydrolysable alkoxysilane groups which may be considered are those conventional binders known to the person skilled in the art which may be functionalized with (meth)acryloyl groups and alkoxysilane groups. These resins may, for example, be produced as follows:

(Meth)acryloyl groups, such as those described above, are first incorporated into an appropriate resin. Residual OH groups may then be reacted with isocyanate-functional alkoxysilanes or residual epoxy groups may be reacted with aminoalkoxysilanes or some of the acryloyl groups may be reacted with aminoalkoxysilanes.

The preparation of binders bearing both olefinic double bonds, in particular (meth)acryloyl groups, and hydrolysable alkoxysilane groups shall be described in more detail for polyurethanes as an example. The polyurethane binders with free-radically polymerizable olefinic double bonds in the form of (meth)acryloyl groups and with hydrolysable alkoxysilane groups may be produced by various methods. According to a first variant, (meth)acryloyl-functional polyurethanes are first produced, into which alkoxysilane groups are subsequently introduced. According to a second variant, polyurethanes containing alkoxysilane groups are first produced and (meth)acryloyl groups are then introduced into these polyurethanes. Both production variants will be described in greater detail below.

According to variant 1, (meth)acryloyl-functional polyurethanes are first produced using conventional methods. This may, for example, proceed by: transesterifying OH-functional polyurethanes with alkyl esters of (meth)acrylic acid; esterifying OH-functional polyurethane resins with (meth)acrylic acid; reacting OH-functional polyurethane resins with isocyanate-functional (meth)acrylates or reacting acid-functional polyurethanes with epoxy-functional (meth)acrylates. The hydrolysable alkoxysilane groups are then introduced.

Functionalization of the polyurethane (meth)acrylates with hydrolysable alkoxysilane groups may, for example, proceed by reacting residual OH groups in the polyurethane (meth)acrylate with isocyanate-functional alkoxysilanes or reacting residual epoxy groups with aminoalkoxysilanes or reacting some of the acryloyl groups with aminoalkoxysilanes.

For example, polyisocyanates may be reacted with hydroxyalkyl (meth)acrylates, the isocyanate groups being completely consumed, and the aminoalkoxysilanes may then be added to some of the double bonds by Michael addition. Some of the isocyanate groups of a polyisocyanate may also be reacted with hydroxyalkyl (meth)acrylates and the aminoalkoxysilane may then be added to the residual isocyanate groups.

According to variant 2, compounds comprising alkoxysilane groups are first produced and (meth)acryloyl groups are then introduced. This may, for example, proceed by reacting an alkyl (meth)acrylate with a primary aminoalkoxysilane by Michael addition to yield the secondary aminoalkoxysilane and then performing a reaction with polyisocyanates to yield an NCO-functional prepolymer. The prepolymer containing NCO may then be reacted with hydroxyalkyl (meth)acrylates. Similarly, it is also possible in the first step to react a primary aminoalkoxysilane with a cyclic carbonate to yield the OH-functional alkoxysilane, which latter is then further reacted with polyisocyanate and hydroxyalkyl (meth)acrylates. It is also possible initially to react polyisocyanates with secondary aminoalkoxysilanes and then further to react residual isocyanate groups with hydroxyalkyl (meth)acrylates.

Variant 2 for the production of the polyurethane binder is preferably used. The equivalent ratio of free-radically polymerizable olefinic double bonds in the form of (meth)acryloyl groups to hydrolysable alkoxysilane groups (mono-, di- and trialkoxysilane groups are in each case calculated as one equivalent) in the binder system may be, for example, 1:0.1 to 1:5, preferably 1:0.2 to 1:4.

The binders with free-radically polymerizable olefinic double bonds and/or hydrolysable alkoxysilane groups may furthermore additionally contain hydroxyl groups. The hydroxyl groups may be obtained or introduced using measures known to the person skilled in the art. For example, the hydroxyl groups may be introduced by reacting NCO groups still present in the binders with polyols. The additionally present hydroxyl groups have a catalytic action on moisture curing and can also react with the alkoxysilane groups under a condensation reaction.

Free-radical inhibitors may be added to the binders'in order to prevent premature polymerization of the double bonds present. Examples of free-radical inhibitors are hydroquinone, 4-methoxyphenol, 2,6-di-tert.-butyl-4-methylphenol, phenothiazine, 3,5-di-tert.-butyl-4-hydroxyanisole, 2-tert.-butyl-4-hydroxyanisole, 3-tert.-butyl-4-hydroxyanisole, p-benzoquinone.

The coating compositions curable by means of high-energy radiation and by means of moisture which are usable in the process according to the invention are liquid coating compositions. The liquid coating compositions contain organic solvents. The organic solvents comprise conventional coating solvents. It is, however, essential to the invention that the coating compositions curable by means of high-energy radiation and moisture contain 10-60 wt.%, preferably 15-45 wt.%, relative to the complete coating composition, of at least one polar, water-miscible, organic solvent with a water solubility at 20°C of at least 220 g/l. The proportion of polar, water-miscible, organic solvents with a water solubility at 20°C of at least 220 g/l may be, for example, 50-100 wt.%, relative to the entire quantity of organic solvents present in the coating composition. Examples of polar, water-miscible, organic solvents with a water solubility at 20°C of at least 220 g/l are N-methylpyrrolidone, dimethylformamide; ether esters such as, for example, ethylene glycol monomethyl ether acetate, alcohols, for example, alkanols, such as methanol, ethanol, propanol; glycols, such as ethylene glycol, propylene glycol, diethylene glycol, dipropylene glycol, triethylene glycol, tripropylene glycol; glycol ethers, such as ethylene glycol monomethyl ether, ethylene glycol monoethyl ether, ethylene glycol isopropyl ether, ethylene glycol monobutyl ether, diethylene glycol monomethyl ether, diethylene glycol monoethyl ether, diethylene glycol monobutyl ether, triethylene glycol monoethyl ether, triethylene glycol monobutyl ether, methoxypropanol, ethoxypropanol, propoxypropanol, propylene glycol dimethyl ether, dipropylene glycol dimethyl ether, diethylene glycol dimethyl ether, dipropylene glycol monomethyl ether, methoxybutanol and ethylene glycol monomethyl ether acetate, cyclic ketones such as butyrolactone. The corresponding solvents may be used individually or as a mixture. Preferred organic solvents are here those which are unlimitedly water-soluble at 20°C, i.e. which are unlimitedly water-miscible. It is preferably possible, for example, to use butyrolactone and glycol ethers, such as dipropylene glycol monomethyl ether and dipropylene glycol dimethyl ether as well as alcohols, such as for example isopropanol.

The coating compositions may contain photoinitiators in order to initiate free-radical polymerization. Suitable photoinitiators include, for example, those which absorb in the wavelength range from 190 to 600 nm. Examples of photoinitiators for free-radically curing systems are benzoin and derivatives, acetophenone and derivatives, such as, for example, 2,2-diacetoxyacetophenone, benzophenone and derivatives, thioxanthone and derivatives, anthraquinone, 1-benzoylcyclohexanol, organophosphorus compounds, such as for example acyl phosphine oxides. The photoinitiators are used, for example, in quantities of 0.1-7 wt-%, preferably of 0.5-5 wt-%, relative to the total of free-radically polymerizable prepolymers, reactive diluents and photoinitiators. The photoinitiators may be used individually or in combination. They may also be used in combination with suitable coinitiators, for example amines, such as tertiary amines.

The coating compositions may contain catalysts to catalyze moisture curing. Examples of such catalysts are Lewis bases, for example, cycloaliphatic amines, such as, diazabicyclooctane, diazabicycloundecene, and diazabicyclononene; aliphatic amines, such as, triethylamine, tripropylamine, diethanolamine, monoethanolamine, triethanolamine, diethylethanolamine, dimethylethanolamine, dipropylethanolamine, and dimethylisopropanolamine. Further examples of catalysts are organo tin compounds, such as, dibutyltin dilaurate, dibutyltin dioctoate and acid catalysts, such as, for example, formic acid, p-toluenesulfonic acid, dodecylbenzenesulfonic acid, dinonylnaphthalenedi- or -monosulfonic acid. The catalysts may be blocked, for example, blocked p-toluenesulfonic acid, dodecylbenzenesulfonic acid, dinonylnaphthalenedisulfonic acid or dinonylnaphthalenemonosulfonic acid. The catalysts may be used individually or in combination with one another.

The coating compositions curable by means of high energy radiation and by means of moisture which are usable in the process according to the invention may comprise pigmented or unpigmented coating compositions for producing any desired layer of a multi-layer structure. Preferably, however, they comprise, as already described above, transparent clear coats, transparent sealing coats or pigmented one-layer top coats.

The coating compositions curable by means of high energy radiation and by means of moisture used in the process according to the invention may contain transparent as well as color-imparting and/or special effect-imparting pigments and extenders. Suitable color-imparting pigments are any conventional coating pigments of an organic or inorganic nature. Examples of inorganic or organic color-imparting pigments are titanium dioxide, micronised titanium dioxide, iron oxide pigments, carbon black, azo pigments, phthalocyanine pigments, quinacridone or pyrrolopyrrole pigments. Examples of special effect-imparting pigments are metal pigments, for example, made from aluminum, copper or other metals; interference pigments, such as, for example, metal oxide coated metal pigments, for example, titanium dioxide coated or mixed oxide coated aluminum, coated mica, such as, for example, titanium dioxide coated mica and graphite effect pigments. Soluble dyes may also be present. Examples of usable extenders are silicon dioxide, aluminum silicate, barium sulfate, calcium carbonate and talcum.

In addition to the already stated initiators, inhibitors and catalysts, the coating composition may contain further conventional coating additives. Examples of further conventional coating additives are levelling agents, rheological agents, such as, highly disperse silica or polymeric urea compounds, thickeners, for example, based on partially cross-linked, carboxy-functional polymers or on polyurethanes, defoamers, wetting agents, anticratering agents, degassing agents, thermolabile initiators, antioxidants and light stabilizers based on HALS (hindered amine light stabilizers) products and/or UV absorbers. The additives are used in conventional amounts known to the person skilled in the art.

The coating compositions may be formulated as single-component or two-component coating compositions, depending upon whether a blocked or unblocked catalyst is used for moisture curing. If an unblocked catalyst is used, the binders curable by means of high energy radiation and by means of moisture, i.e., at least the binders with the hydrolysable alkoxysilane groups, are present in one component and the unblocked catalyst is present in a second component. If a blocked catalyst is used, the coating compositions may be provided as a single-component formulation without any need to prepare a second component. A blocked catalyst may, of course, also be provided in the second component.

The polar, organic solvents with a water solubility at 20°C of at least 220 g/l which are to be used according to the invention may also be added to the coating composition in the form of a second component. As described above, the unblocked catalyst may also be present in the second component. It is also possible to add the polar, organic solvents with a water solubility at 20°C of at least 220 g/I which are to be used according to the invention directly to the coating compositions during the production thereof.

Another possible way of producing the coating compositions is to use a component containing water as the second component, so that moisture curing may proceed irrespective of ambient conditions, in particular atmospheric humidity, during application of the coating compositions. The component containing water may also, if desired, contain the catalyst, preferably an unblocked catalyst and/or the above-stated organic solvents.

According to a first preferred embodiment, the coating composition based on a binder system curable by means of high energy radiation and by means of moisture that is used in the process according to the invention is a clear coating composition that is applied onto a pigmented base coat layer to produce a clear coat layer.

According to a second preferred embodiment, the coating composition based on a binder system curable by means of high energy radiation and by means of moisture that is used in the process according to the invention is a one-layer top coat composition that is applied onto a substrate coated with one or more coating layers, for example, with a primer and/or surfacer layer, to produce a pigmented top coat layer.

According to a third preferred embodiment, the coating composition based on a binder system curable by means of high energy radiation and by means of moisture is used in the process according to the invention to produce an outer transparent sealing layer.

In the process according to the invention, the coating compositions may be applied using known methods, preferably by means of spraying.

Substrates which may be used are the various materials used in vehicle construction, for example, metals, such as, iron, zinc, aluminum, magnesium, stainless steel or the alloys thereof or plastics, such as, polyurethanes, polycarbonates or polyolefins.

When applying the coating compositions based on a binder system curable by means of high energy radiation and by means of moisture, it is, for example, possible to proceed in such a manner that the corresponding coating composition is initially applied onto the particular substrate, wherein application may be followed by flashing-off, for example, within a period of 5 to 40 minutes, at 20 to 60°C. After the optional intermediate flash-off phase, irradiation with high energy radiation can proceed. UV radiation or electron beam radiation may be used as high energy radiation. UV radiation is preferred. Irradiation may proceed continuously or discontinuously (in cycles).

Irradiation may be carried out, for example, in a belt unit fitted with one or more UV radiation emitters or with one or more UV radiation emitters positioned in front of the object to be irradiated, or the area to be irradiated, or the substrate to the coated and/or the UV radiation emitter(s) is(are) moved relative to one another during irradiation. For example, the subject to be coated may be moved through an irradiation tunnel fitted with one or more UV radiation emitters, and/or a robot equipped with one or more UV radiation emitters may guide the UV radiation emitter(s) over the substrate surface.

In principle, the duration of irradiation, distance from the object and/or radiation output of the UV radiation emitter may be varied during UV irradiation. The preferred source of radiation comprises UV radiation sources emitting in the wave length range from 180 to 420 nm, in particular, from 200 to 400 nm. Examples of such UV radiation sources are optionally doped high, medium and low pressure mercury vapour emitters and gas discharge tubes, such as, for example, low pressure xenon lamps. Apart from these continuously operating UV radiation sources, however, it is also possible to use discontinuous UV radiation sources. These are preferably so-called high-energy flash devices (UV flash lamps for short). The UV flash lamps may contain a plurality of flash tubes, for example, quartz tubes filled with inert gas, such as, xenon. The UV flash lamps have an illuminance of, for example, at least 10 megalux, preferably, from 10 to 80 megalux per flash discharge. The energy per flash discharge may be, for example, 1 to 10 kJoule.

The irradiation time with UV radiation when UV flash lamps are used as the UV radiation source may be, for example, in the range from 1 millisecond to 400 seconds, preferably, from 4 to 160 seconds, depending on the number of flash discharges selected. The flashes may be triggered, for example, about every 4 seconds. Curing may take place, for example, by means of 1 to 40 successive flash discharges.

If continuous UV radiation sources are used, the irradiation time may be, for example, in the range from a few seconds to about 5 minutes, preferably less than 5 minutes.

The distance between the UV radiation sources and the substrate surface to be irradiated may be, for example, 5 to 60 cm.

irradiation with UV radiation may proceed in one or more successive irradiation steps. In other words, the energy to be applied by irradiation may be supplied completely in a single irradiation step or in portions in two or more irradiation steps.

Curing under the reaction of moisture is carried out by exposure to conditions of sufficient moisture, e.g., by exposure to humidity. The moisture curing reaction can be carried out at a relative humidity in the range of, for example, 10-90%, preferably, 20-80%. It is also possible, as already described above, to add small quantities of water to the coating composition with a second component.

In order to promote rapid development of satisfactory hardness, scratch resistance and chemical resistance in the shaded areas too, it is advantageous to expose the applied coating layer to thermal energy before, during and/or after UV irradiation. The coating layer may, for example, be exposed to temperatures of approximately 60°C to 160°C, preferably, 80°C to 120°C (object temperature in each case). It is, however, particularly advantageous in order to achieve good resistance values and adequate tack-free drying and hardness also in the shaded zones for curing to proceed even at temperatures of no more than 80°C in short curing times of, for example, 10 to 30 minutes.

The process according to the invention may be used in industrial and vehicle coating, in particular in vehicle original coating and in vehicle repair coating.

The following Examples are intended to illustrate the invention in greater detail. The following abbreviations have been used: pbw means parts by weight, and wt-% means weight percent.

### Examples

### Example 1

### Production of alkoxysilane-functional urethane acrylates A)

478 pbw of hexamethylene diisocyanate biuret (75%, Tolonate® HDB/75 from Rhodia), 8 pbw of neopentyl glycol and 30 pbw of butyl acetate were initially introduced into a 2 liter, four-necked flask fitted with a stirrer, thermometer and column. The reaction mixture was heated to a maximum of 60°C. 235 pbw of a secondary aminoalkoxysilane (Silquest® A 1170, Witco) were then apportioned in such a manner that the temperature did not exceed 80°C. Rinsing was performed with 40 pbw of butyl acetate. Once an NCO value of < 5.9 had been reached, 0.6 pbw of methylhydroquinone and 0.5 pbw of dibutyltin dilaurate solution (10%) were added. 149 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with 60 pbw of butyl acetate.

A colorless resin solution was obtained with a solids content of 72.3% (1 h/150°C), a viscosity of 1840 mPas (Höppler, 25°C), a calculated double bond equivalent weight of 725 and a calculated content of silicon bound in alkoxysilane groups of 5,1 wt-%, relative to resin solids content.

### Example 2

### Production of alkoxysilane-functional urethane acrylates B)

529 pbw of hexamethylene diisocyanate biuret (75%, Tolonate® HDB/75 from Rhodia), 9 pbw of neopentyl glycol and 20 pbw of butyl acetate were initially introduced into a 2 litre, four-necked flask fitted with a stirrer, thermometer and column. The reaction mixture was heated to a maximum of 60°C. 179 pbw of a secondary aminoalkoxysilane (Dynasilan® 1189, Degussa) were then apportioned in such a manner that the temperature did not exceed 80°C. Rinsing was performed with 40 pbw of butyl acetate. Once a NCO value of < 6.3 % had been reached, 0.6 pbw of methylhydroquinone and 0.5 pbw of dibutyltin dilaurate solution (10%) were added. 165 pbw of butanediol monoacrylate were then apportioned in such a manner that the temperature did not exceed 80°C. The reaction mixture was stirred and the temperature was not allowed to exceed a maximum of 80°C until an NCO value was no longer detectable. The mixture was then diluted with 57 pbw of butyl acetate.

A colorless resin solution was obtained with a solids content of 73.2% (1 h/150°C), a viscosity of 2660 mPas (Höppler, 25°C), a calculated double bond equivalent weight of 655 and a calculated content of silicon bound in alkoxysilane groups of 2.8 wt-%, relative to resin solids content.

### Example 3

### Production of alkoxysilane-functional urethane acrylates C)

121 pbw of a primary aminoalkoxysilane (Dynasilan® AMMO, Degussa) were reacted with 86 pbw of butyl acrylate in 35 pbw of butyl acetate in a 2 litre, four-necked flask fitted with a stirrer, thermometer and column. Once the exothermic reaction had subsided, 515 pbw of hexamethylene diisocyanate biuret (75%, Tolonate® HDB/75 from Rhodia) and 35 pbw of butyl acetate were added. At a maximum temperature of 80°C, the reaction was continued until an NCO value of 7.15% was reached. The reaction mixture was then combined with 0.6 pbw of methylhydroquinone and 0.5 pbw of dibutyltin dilaurate (as 10% solution). 156 pbw of hydroxyethyl acrylate were then apportioned in such a manner that the temperature did not exceed 80°C. The reaction mixture was stirred and not allowed to exceed a maximum of 80°C until an NCO value was no longer detectable. The mixture was then diluted with 51 pbw of butyl acetate.

A colorless resin solution was obtained with a solids content of 70.0% (1 h/150°C), a viscosity of 1065 mPas (Höppler, 25°C), a calculated double bond equivalent weight of 558 and a calculated content of silicon bound in alkoxysilane groups of 2.5 wt-%, relative to resin solids content.

### Example 4

### Production of clear coats

Clear coats 1-3 usable in the process according to the invention were formulated from the following constituents:

### Clear coat 1 (single-component):

70.0 wt-% of urethane acrylate resin A from Example 1
0.6 wt-% of Tinuvin® 400/85 (UV absorber; CIBA)
0.5 wt-% of Tinuvin® 292 (HALS; CIBA)
0.3 wt-% of Byk 341/52 (levelling agent; Byk)
0.9 wt-% of Darocur® 1173 (photoinitiator; CIBA)
0.3 wt-% of Irgacure® 819 (photoinitiator; CIBA)
2.0 wt-% of Nacure® 2500 (p-toluenesulfonic acid based catalyst, blocked; King Industries)
25.4 wt.% of Dowanol® DPM (Dow Chemicals, dipropylene glycol dimethyl ether, unlimitedly water-miscible)

### Clear coat 2 (single-component):

70.0 wt-% of urethane acrylate resin B from Example 2
0.6 wt-% of Tinuvin® 400/85 (UV absorber; CIBA)
0.5 wt-% of Tinuvin® 292 (HALS; CIBA)
0.2 wt-% of Tego Rad 2100 (levelling agent; Tego Chemie Service GmbH)
0.9 wt-% of Darocur® 1173 (photoinitiator; CIBA)
0.3 wt-% of Irgacure® 819 (photoinitiator; CIBA)
0.5 wt-% of DBTL (dibutyltin dilaurate; catalyst)
27.0 wt-% of Dowanol® DPM (Dow Chemicals, dipropylene glycol dimethyl ether, unlimitedly water-miscible)

### Clear coat 3 (two-component)

### Component 1:

70.0 wt-% of urethane acrylate resin C from Example 3
0.5 wt-% Sanduvor® 3058 (HALS; CIBA)
0.5 wt-% of Sanduvor® 3206 (UV absorber; CIBA)
0.3 wt-% of Tego Rad 2100 (levelling agent; Tego Chemie Service GmbH)
0.9 wt-% of Darocur® 1173 (photoinitiator; CIBA)
0.3 wt-% of Irgacure® 819 (photoinitiator; CIBA)
27.6 wt-% of methoxy propyl acetate (water solubility of 226 g/I at 20°C)

### Component 2 (catalyst):

90.0 wt-% of isopropanol (unlimitedly water-miscible)
10.0 wt-% of p-toluenesulfonic acid

100 pbw of component 1 were mixed shortly before application with 5 pbw of component 2.

Clear coats 1-3 produced above were adjusted to spraying viscosity (24 seconds, flow cup 4) with methoxy propyl acetate.

### Comparison clear coat:

### Clear coat without water-miscible organic solvent (single-component):

70.0 wt.% of urethane acrylate resin A from Example 1
0.6 wt.% of Tinuvin® 400/85 (UV absorber; CIBA)
0.5 wt.% of Tinuvin® 292 (HALS; CIBA)
0.3 wt.% of Byk 341/52 (levelling agent; Byk)
0.9 wt.% of Darocur® 1173 (photoinitiator; CIBA)
0.3 wt.% of Irgacure® 819 (photoinitiator; CIBA)
2.0 wt.% of Nacure® 2500 (p-toluenesulfonic acid based catalyst, blocked)
25.4 wt.% of Solvesso 100 (mixture of aromatic hydrocarbons)
The comparison clear coat was adjusted to spraying viscosity (24 seconds, flow cup 4) with Solvesso 100.

### Application and curing of clear coats 1-3 and of comparison clear coat

The clear coats 1-3 and the comparison clear coat produced above were applied to a dry film thickness of approximately 35 µm onto steel sheets coated with conventional commercial electro-dipcoating, surfacer and base coat (flashed off). After flashing off for 10 minutes at room temperature and drying within 20 minutes at 80°C (circulating air oven), each of the coatings was irradiated with a conventional commercial UV-radiation emitter (medium pressure mercury emitter from Fusion, 240 W/cm, 100% output, at a UV-emitter/object distance of 5.5 cm and a belt speed of 3 m/min).

In order to simulate curing in the shaded areas of an appropriately shaped three-dimensional substrate, i.e., in the areas of a substrate which are not reached by the UV radiation emitters, metal test sheets were produced in a manner similar to that described above and coatings 1-3 and the comparison coating were then cured only with moisture/thermal energy. After application, the coatings were in each case left for 10 minutes at room temperature (flash-off phase) and then cured for 20 minutes at 80°C (circulating air oven).

The following tables show the technical properties of the resultant coatings.

| | Coating 1 thermal only | Coating 1 thermal + UV | Coating 2 thermal only | Coating 2 thermal + UV | Coating 3 thermal only | Coating 3 thermal + UV |
|---|---|---|---|---|---|---|
| Initial gloss | 86 | 87 | 88 | 86 | 86 | 87 |
| Indentatio n (mm) | 7.5 | 6.5 | 8.0 | 7.0 | 7.5 | 6.5 |
| Scratch resistance (Amtec) | 50 | 85 | 45 | 80 | 50 | 83 |
| Xylene test | OK | OK | OK | OK | OK | OK |
| Acid test | 12 | 25 | 11 | 23 | 10 | 22 |
| Constant climate test | 0/0 | 0/0 | 0/0 | 0/0 | 0/0 | 0/0 |

| | Comparison coating thermal only | Comparison coating thermal + UV |
|---|---|---|
| Initial gloss | 73 | 75 |

According to the invention, coatings were obtained which were tack-free in the shaded areas too (moisture curing only, thermally supported) and exhibited adequate hardness and elevated cross-linking, wherein the latter was in particular demonstrated by the xylene test. By using water-miscible organic solvents in the coating compositions which are to be used according to the invention, it has additionally proved possible also to improve the optical properties (gloss) of the resultant coatings.

### Test methods:

Gloss measurement to DIN 67530 at an angle of 20°.

Indentation to DIN EN ISO 1520, value in millimetres.

Amtec scratch resistance, stated as residual gloss after reflow in %.

Residual gloss was measured in % (ratio of initial gloss of the clear coat surface to its gloss after wash scratching, gloss measurement in each case being performed at an angle of illumination of 20°). Wash-scratching was performed using an Amtec Kistler laboratory car wash system (c.f. Th. Klimmasch and Th. Engbert, Entwicklung einer einheitlichen Laborprüfmethode für die Beurteilung der Waschstraßenbeständigkeit von Automobil-Decklacken [development of a standard laboratory test method for evaluating resistance of automotive top coats to car wash systems], in DFO proceedings 32, pages 59 to 66, technology seminars, proceedings of the seminar on 29-30.4.97 in Cologne, published by Deutsche Forschungsgesellschaft für Oberflächenbehandlung e.V., Adersstraße 94, 40215 Düsseldorf).

### Xylene test:

Brief description: A xylene-soaked filter paper is placed on the coating film for 10 minutes. Evaluation: OK = no visible change.

### Acid test:

Brief description: at 65°C, 50 µl drops of 36% sulfuric acid are placed at 1 minute intervals for 30 minutes onto the coating film.
Evaluation: Destruction of the film after X minutes (0-30).
Constant climate test:
to DIN 50017, evaluation: degree of blistering m/g to DIN 53209.

## Claims

1. A process for multi-layer coating of substrates which comprises the steps of applying at least two coating layers and curing of the applied coatings with high energy radiation and moisture;
wherein at least one of the coating layers is formed from a coating composition comprising a binder system of resin solids wherein the resin has free-radically polymerizable olefinic double bonds and hydrolysable alkoxysilane groups, wherein the resin solids content of the coating composition has an equivalent weight of C=C double bonds of 200 - 2000 and has a silicon content of 1 - 10 wt-%, wherein the silicon is bound in alkoxysilane groups and wherein the coating composition contains 10-60 wt.%, relative to the complete coating composition, of polar water-miscible organic solvents with a water solubility at 20 °C of at least 220 g/l and wherein the step of curing of the at least one coating layer comprises irradiation with high energy radiation thereby polymerizing the C=C double bonds via free radical polymerization and exposure to moisture thereby forming siloxane bridges from the alkoxysilane groups.

2. A process according to claim 1, wherein the coating composition comprising a binder system of resin solids having free-radically polymerizable olefinic double bonds and hydrolysable alkoxysilane groups is applied onto a pigmented base coat layer and cured to form a clear coat layer.

3. A process according to claim 1, wherein the coating composition comprising a binder system of resin solids having free-radically polymerizable olefinic double bonds and hydrolysable alkoxysilane groups and being pigmented is applied as a one-layer top coat composition onto a substrate selected from the group consisting of a primer layer, a surfacer layer and a primer/surfacer layer and cured to form a pigmented one-layer top coat layer.

4. A process according to claim 1, wherein the coating composition with a binder system of resin solids having free-radically polymerizable olefinic double bonds and hydrolysable alkoxysilane groups is applied as a transparent sealing coat onto a multi-layer coating to form an outer transparent sealing layer.

5. A process according to one of claims 1 to 4, wherein the resin solids content of the coating composition comprises resins having free-radically polymerizable olefinic double bonds and hydrolysable alkoxysilane groups, an equivalent weight of C=C double bonds of 300 - 1500, and a silicon content of 1 - 7 wt-% wherein the silicon is bound in alkoxysilane groups.

6. A process according to one of claims 1 to 5, wherein the coating composition contains 15-45 wt.%, relative to the complete coating composition, of water-miscible, organic solvents with a water solubility at 20°C of at least 220 g/l.

7. A process according to one of claims 1 to 6, wherein the coating composition contains 50 -100 wt. %, relative to the entire quantity of organic solvents in the coating composition, of water-miscible, organic solvents with a water solubility at 20°C of at least 220 g/l.

8. A process according to one of claims 1 to 7, wherein the alkoxysilane groups comprise trialkoxysilane groups.

9. A process according to one of claims 1 to 8, wherein the binder system with free-radically polymerizable olefinic double bonds and with hydrolysable alkoxysilane groups additionally comprises hydroxyl groups.

10. A process according to one of claims 1 to 9, wherein the high energy radiation is UV radiation.

11. A process according to one of claims 1 to 10, which comprises a process for the multi-layer coating of vehicles and vehicle parts.

12. A process according to claim 11, which comprises a process for the original multi-layer coating of vehicles or the repair of vehicle coatings.

## Patentansprüche

1. Verfahren für die Mehrschichtenbeschichtung von Substraten, welches die Schritte des Auftragens von mindestens zwei Beschichtungsschichten und des Härtens der aufgetragenen Beschichtungen mit Hilfe von Hochenergiestrahlung und Feuchtigkeit umfasst;
wobei mindestens eine der Beschichtungsschichten durch eine Beschichtungszusammensetzung gebildet wird, welche ein Bindemittelsystem aus Feststoffharzen aufweist, wobei das Harz durch freie Radikale polymerisierbare, olefinische Doppelbindungen und hydrolysierbare Alkoxysilangruppen hat, wobei der Gehalt an Feststoffharzen der Beschichtungszusammensetzung ein Äquivalenzgewicht an C=C Doppelbindungen von 200-2000 ausmacht und einen Siliziumgehalt von 1-10 Gewichtsprozent hat, wobei das Silizium an die Alkoxysilangruppen gebunden ist und wobei die Beschichtungszusammensetzung 10-60 Gewichtsprozent, bezogen auf die vollständige Beschichtungszusammensetzung, an polaren, wassermischbaren, organischen Lösungsmitteln enthält mit einer Wasserlöslichkeit bei 20 °C von mindestens 220 g/l und wobei der Schritt des Härtens von der mindestens einen Beschichtungsschicht eine Bestrahlung mit Hochenergiestrahlung umfasst, wodurch die C=C Doppelbindungen über Polymerisation durch freie Radikale und durch Aussetzung gegenüber Feuchtigkeit polymerisiert werden, wodurch aus den Alkoxysilangruppen Siloxanbrücken gebildet werden.

2. Verfahren gemäß Anspruch 1, bei dem die Beschichtungszusammensetzung, die ein Bindemittelsystem aus Feststoffharzen mit durch freie Radikale polymerisierbaren, olefinischen Doppelbindungen und hydrolysierbaren Alkoxysilangruppen aufweist, auf eine pigmentierte Grundbeschichtungsschicht aufgetragen und gehärtet wird, um eine Klarbeschichtungsschicht zu bilden.

3. Verfahren gemäß Anspruch 1, bei dem die Beschichtungszusammensetzung, welche ein Bindemittelsystem aus Feststoffharzen mit durch freie Radikale polymerisierbaren, olefinischen Doppelbindungen und hydrolysierbaren Alkoxysilangruppen aufweist, und welche pigmentiert ist, als eine einschichtige Deckbeschichtungszusammensetzung auf ein Substrat aufgetragen wird, welches ausgewählt wird aus der Gruppe bestehend aus einer Primerschicht, einer Oberflächenschicht und einer Primer-/Oberflächenschicht, und gehärtet wird, um eine pigmentierte, einschichtige Deckbeschichtungsschicht zu bilden.

4. Verfahren gemäß Anspruch 1, bei dem die Beschichtungszusammensetzung mit einem Bindemittelsystem aus Feststoffharzen mit durch freie Radikale polymerisierbaren, olefinischen Doppelbindungen und hydrolysierbaren Alkoxysilangruppen als eine durchsichtige Abdichtungsbeschichtung auf eine Mehrschichtenbeschichtung aufgetragen wird, um eine äußere, durchsichtige Abdichtungsschicht zu bilden.

5. Verfahren gemäß einem der Ansprüche 1 bis 4, bei dem der Gehalt an Feststoffharzen der Beschichtungszusammensetzung Harze aufweist, welche durch freie Radikale polymerisierbare, olefinische Doppelbindungen und hydrolysierbare Alkoxysilangruppen, ein Äquivalenzgewicht an C=C Doppelbindungen von 300-1500, und einen Siliziumgehalt von 1-7 Gewichtsprozent aufweisen, wobei das Silizium an die Alkoxysilangruppen gebunden ist.

6. Verfahren gemäß einem der Ansprüche 1 bis 5, bei dem die Beschichtungszusammensetzung 15-45 Gewichtsprozent, bezogen auf die vollständige Beschichtungszusammensetzung, an wassermischbaren, organischen Lösungsmitteln mit einer Wasserlöslichkeit bei 20 °C von mindestens 220 g/l enthält.

7. Verfahren gemäß einem der Ansprüche 1 bis 6, bei dem die Beschichtungszusammensetzung 50-100 Gewichtsprozent, bezogen auf die gesamte Menge an organischen Lösungsmitteln in der Beschichtungszusammensetzung, an wassermischbaren, organischen Lösungsmitteln enthält mit einer Wasserlöslichkeit bei 20 °C von mindestens 220 g/l.

8. Verfahren gemäß einem der Ansprüche 1 bis 7, bei dem die Alkoxysilangruppen Trialkoxysilangruppen aufweisen.

9. Verfahren gemäß einem der Ansprüche 1 bis 8, bei dem das Bindemittelsystem mit durch freie Radikale polymerisierbaren, olefinischen Doppelbindungen und mit hydrolysierbaren Alkoxysilangruppen zusätzlich Hydroxylgruppen aufweist.

10. Verfahren gemäß einem der Ansprüche 1 bis 9, bei dem die Hochenergiestrahlung eine UV Strahlung ist.

11. Verfahren gemäß einem der Ansprüche 1 bis 10, welches ein Verfahren für die Mehrschichtenbeschichtung von Fahrzeugen und von Fahrzeugteilen umfasst.

12. Verfahren gemäß Anspruch 11, welches ein Verfahren für die ursprüngliche Mehrschichtenbeschichtung von Fahrzeugen oder für die Reparatur von Fahrzeugbeschichtungen umfasst.

## Revendications

1. Procédé pour le revêtement multicouche de substrats qui comprend les étapes d'application d'au moins deux couches de revêtement et de durcissement des revêtements appliqués avec un rayonnement à haute énergie et de l'humidité;
dans lequel au moins une des couches de revêtement est formée à partir d'une composition de revêtement comprenant un système de liant de solides de résine où la résine possède des liaisons doubles oléfiniques polymérisables par radicaux libres et des groupes d'alkoxysilane hydrolysables, dans lequel la teneur en solides de résine de la composition de revêtement possède un poids équivalent de liaisons doubles C=C de 200-2000 et possède une teneur en silicium de 1-10% en poids, dans lequel le silicium est lié dans les groupes d'alkoxysilane et dans lequel la composition de revêtement contient 10-60% en poids, relativement à la composition de revêtement complète, de solvants polaires organiques miscibles avec l'eau avec une solubilité dans l'eau à 20°C d'au moins 220 g/l et dans lequel l'étape de durcissement de la au moins une couche de revêtement comprend une irradiation avec un rayonnement à haute énergie polymérisant ainsi les liaisons doubles C=C via une polymérisation par radicaux libres et une exposition à l'humidité formant ainsi des ponts de siloxane à partir des groupes d'alkoxysilane.

2. Procédé suivant la revendication 1, dans lequel la composition de revêtement comprenant un système de liant de solides de résine possédant des liaisons doubles oléfiniques polymérisables par radicaux libres et des groupes d'alkoxysilane hydrolysables est appliquée sur une couche de revêtement de base pigmentée et durcie pour former une couche de revêtement clair.

3. Procédé suivant la revendication 1, dans lequel la composition de revêtement comprenant un système de liant de solides de résine possédant des liaisons doubles oléfiniques polymérisables par radicaux libres et des groupes d'alkoxysilane hydrolysables et qui est pigmentée est appliquée sous forme d'une composition de couche de dessus monocouche sur un substrat choisi dans le groupe constitué d'une couche de fond, d'une couche de surfaçant et d'une couche de fond/surfaçant et durcie pour former une couche de revêtement de dessus monocouche pigmentée.

4. Procédé suivant la revendication 1, dans lequel la composition de revêtement avec un système de liant de solides de résine possédant des liaisons doubles oléfiniques polymérisables par radicaux libres et des groupes d'alkoxysilane hydrolysables est appliquée sous forme d'une couche d'étanchéité transparente sur un revêtement multicouche pour former une couche d'étanchéité transparente externe.

5. Procédé suivant l'une quelconque des revendications 1 à 4, dans lequel la teneur en solides de résine de la composition de revêtement comprend des résines possédant des liaisons doubles oléfiniques polymérisables par radicaux libres et des groupes d'alkoxysilane hydrolysables, un poids équivalent de liaisons doubles C=C de 300-1500 et une teneur en silicium de 1-7% en poids où le silicium est lié dans les groupes d'alkoxysilane.

6. Procédé suivant l'une quelconque des revendications 1 à 5, dans lequel la composition de revêtement contient 15-45% en poids, relativement à la composition de revêtement complète, de solvants organiques, miscibles avec l'eau avec une solubilité dans l'eau à 20°C d'au moins 220 g/l.

7. Procédé suivant l'une quelconque des revendications 1 à 6, dans lequel la composition de revêtement contient 50-100% en poids, relativement à la quantité entière de solvants organiques dans la composition de revêtement, de solvants organiques, miscibles dans l'eau avec une solubilité dans l'eau à 20°C d'au moins 220 g/l.

8. Procédé suivant l'une quelconque des revendications 1 à 7, dans lequel les groupes d'alkoxysilane comprennent des groupes de trialkoxysilane.

9. Procédé suivant l'une quelconque des revendications 1 à 8, dans lequel le système de liant avec des liaisons doubles oléfiniques polymérisables par radicaux libres et avec des groupes d'alkoxysilane hydrolysables comprend en outre des groupes hydroxyles.

10. Procédé suivant l'une quelconque des revendications 1 à 9, dans lequel le rayonnement à haute énergie est un rayonnement UV.

11. Procédé suivant l'une quelconque des revendications 1 à 10, qui comprend un procédé pour le revêtement multicouche de véhicules et de pièces de véhicules.

12. Procédé suivant la revendication 11, qui comprend un procédé pour le revêtement multicouche d'origine de véhicules ou la réparation de revêtements de véhicules.
